# EUROPÄISCHE PATENTSCHRIFT

(11) **EP 2 142 400 B1**
(45) Veröffentlichungstag und Bekanntmachung des Hinweises auf die Patenterteilung: **05.06.2019**
(21) Anmeldenummer: 08749411.8
(22) Anmeldetag: 09.05.2008
(51) Int. Cl.: B60R 11/04, B60R 11/02

(54) **ANORDNUNG ZUR BEFESTIGUNG VON FUNKTIONSBAUGRUPPEN IN EINEM FAHRZEUG**
ARRANGEMENT FOR FASTENING FUNCTIONAL UNITS IN A VEHICLE
DISPOSITIF DE FIXATION DE MODULES FONCTIONNELS DANS UN VÉHICULE

(30) Priorität: 10.05.2007 DE 102007021860
(43) Veröffentlichungstag der Anmeldung: 13.01.2010
(73) Patentinhaber: Valeo Schalter und Sensoren GmbH, 74321 Bietigheim-Bissingen (DE)
(72) Erfinder: GRÜNER, Roland, 71732 Tamm (DE); RADDAZ, Laurent, 71732 Tamm (DE); LIPFERT, Rainer, 74076 Heilbronn (DE); BINDER, Bernd, 71679 Asperg (DE); HASCH, Martin, 71701 Schwieberdingen (DE); BARWANITZ, Michael, 74372 Sersheim (DE); SIMONIS, Karl, 75428 Illingen (DE); HARRIGAN, Daryl, Coventry CV5 8DU (GB)
(86) Internationale Anmeldenummer: PCT/EP2008/003728
(87) Internationale Veröffentlichungsnummer: WO 2008/138550

(56) Entgegenhaltungen:
- DE-C1- 19 647 200
- JP-A- 1 120 558
- JP-A- 2007 015 457
- US-A- 4 052 030
- US-A- 4 103 983
- US-A1- 2003 020 603
- US-A1- 2005 006 575

## Beschreibung

### Stand der Technik

Die Erfindung betrifft eine Anordnung zur Befestigung von Funktionsbaugruppen in einem Fahrzeug, beispielsweise zur Halterung von Sensor-, Bedien- und/oder Anzeigelementen in einem sogenannten Dachmodul eines Fahrzeugs, nach der Gattung des Hauptanspruchs.

Es ist beispielsweise aus der DE 100 44 738 C2 bekannt, dass in einem Kraftfahrzeug im Sicht- oder Bedienbereich des Fahrers oder eines weiteren Insassen, vorzugsweise im Dachhimmel des Kraftfahrzeuges ein Trägerteil angeordnet ist, das mechanische und elektrische Aufnahme- und/oder Kupplungsteile aufweist, mit denen dort einzelne Funktionsbaugruppen, wie Schalter oder Displays, mechanisch und elektrisch verbunden werden können. Hierzu weist die bekannte Anordnung drei jeweils um 120° versetzte Bereiche mit den Aufnahme- und/oder Kupplungsteilen als Aufnahmevertiefungen auf, in die die Funktionsbaugruppen gesteckt werden können.

Weiterhin ist aus diesem Stand der Technik bekannt, dass das Trägerteil aus einem mit dem Rahmen des jeweiligen Kraftfahrzeuges verbindbaren Befestigungsteil und einem Halteteil mit den zuvor beschriebenen Aufnahmevertiefungen zusammengesetzt ist. Das Halteteil ist dabei noch quer zur Erstreckungsachse des Trägerteils schwenkbar mit dem Befestigungsteil verbunden, wobei jedoch insgesamt das Trägerteil fest mit dem Dachhimmel verbunden, ev. sogar eingeschäumt ist und auch mit dem Dachhimmel zusammen bei der Montage des Kraftfahrzeugs herstellbar ist.

Weiterhin ist auch noch aus der DE 20 2004 020 891 U1 bekannt, dass ein Dachmodul als Funktionsbaugruppenträger auch derart am Dachhimmel eines Kraftfahrzeuges angebracht werden kann, dass es in Bereiche des Kraftfahrzeuges hineinreicht, in denen mit entsprechenden Sensoren äußere Ereignisse detektierbar sind. Zum Beispiel können hier Regensensoren oder Kameras im Bereich der Windschutzscheibe des Fahrzeugs angebracht werden.

Aus der JP 2007/015457 ist eine Anordnung zur Befestigung einer Kamera im Bereich einer Windschutzscheibe eines Fahrzeugs mit einem Trägerteil bekannt, das über eine Schraubverbindung an einem vorderen Dachquerträger des Fahrzeugs befestigt ist. Das Trägerteil weist eine in den Bereich der Windschutzscheibe hineinragende Verlängerung zur Befestigung einer Frontkamera auf und bildet ferner Befestigungsstellen für eine zugehörige Kameraabdeckung.

### Darstellung der Erfindung

Die Erfindung geht von einer Anordnung zur Befestigung von Funktionsbaugruppen in einem Fahrzeug mit einem Trägerteil aus, welches zwischen der mindestens einen Funktionsbaugruppe und dem Fahrzeug angeordnet ist. In vorteilhafter Weise ist erfindungsgemäß vorgesehen, dass das Trägerteil auf besonders einfache Weise einstückig ausgeführt ist und dabei auf der dem Fahrzeug zugewandten Seite jeweils fahrzeugspezifische mechanische Verbindungselemente und auf der gegenüberliegenden, dem Innenraum zugewandten Seite, jeweils der mindestens einen Funktionsbaugruppe angepasste mechanische Verbindungselemente aufweist.

Bevorzugt ist mit der Anordnung ein Dachmodul gebildet, das in etwa mittig im Übergangsbereich der Fahrzeugkarosserie zu einer Scheibe, vorzugsweise der vorderen Windschutzscheibe, angebracht ist und das Dachmodul ist über das einstückige Trägerteil mit dem Windlauf oder Querholm als Karosserieteil als mechanische Dach- oder Fahrzeugschnittstelle verbunden.

Bisher war es üblich, dass solche Anordnungen eines Dachmoduls in einem Fahrzeug jeweils für jedes Fahrzeug mit einer extra angepassten Vorrichtung beispielsweise an den Dachhimmel eines Fahrzeugs geclipst werden oder, wie beim eingangs erwähnten Stand der Technik, mit aufwändigen speziellen Kombinationen aus Halteteilen am Fahrzeug und Befestigungsteilen zum Dachmodul hin versehen werden. Hier müssen also für verschiedene Fahrzeuge jeweils unterschiedliche Dachmodule oder relativ komplexe Teilekombinationen zur Befestigung hergestellt werden.

Durch eine immer weiter fortschreitende Integration von weiteren Funktionen in solche Anordnungen entstehen jedoch immer komplexere Dachmodule oder vergleichbare Anordnungen, bei denen es sehr kostenaufwändig ist, diese an immer zahlreichere Varianten von Fahrzeugen anzupassen. Mit der erfindungsgemäßen Anordnungen eines relativ einfach herzustellenden einstückigen Trägerteils können zum Beispiel weitgehend einheitliche Dachmodule hergestellt werden und somit können diese ohne einen Anstieg der Modulvarianten auf einfache Weise in unterschiedlichen Fahrzeugtypen eingesetzt werden.

Das erfindungsgemäße Trägerteil bildet auf einfache Weise eine mechanische Schnittstelle beispielsweise zum Windlauf bzw. zum Querholm an der Verbindung der Windschutzscheibe zur Karosserie bzw. zur Dachkonstruktion des Fahrzeugs. Über dieses Trägerteil kann dann das Dachmodul auf einfache Weise zum Beispiel mit dem Windlauf verschraubt, verrastet oder in ähnlicher Weise befestigt werden, wobei das eigentliche Dachmodul auch bei verschiedenen Fahrzeugtypen identisch bleiben kann. Mit der Adapterfunktion des erfindungsgemäß gestalteten Trägerteils können hier unterschiedliche Abstände, Konturen und Befestigungsmöglichkeiten zwischen dem Windlauf und der Unterseite des Dachmoduls einfach ausgeglichen werden.

Auch wenn die zuvor beschriebenen Dachmodule durch die Vermehrung von Funktionen und Baugruppen immer größer und mechanisch aufwändiger werden, kann mit der einfachen Anpassungsmöglichkeit des erfindungemäßen Trägerteils auf einfache Weise ein besonders stabile Befestigungsmöglichkeit für das Dachmodul geschaffen werden. Durch diese einfach auszuführende fixe und stabile Befestigung mit dem erfindungsgemäßen Trägerteil können auch größere komplexere Dachmodule weitgehend spielfrei und vibrationsarm befestigt und dann dauerhaft gehalten werden.

Mit einer relativ einfach durchzuführenden Verbesserung der Formgebung oder des Materials des Trägerteils kann eine Versteifung eines Dachmoduls erreichte werden, wobei dann das Dachmodul selbst festigkeitsmäßig einfacher gestaltet werden kann, wodurch beim relativ komplex aufgebauten Dachmodul Kosten gespart werden können.

Bei der erfindungsgemäßen Anordnung ist das einstückige Trägerteil mit einer aus dem Verbindungsbereich mit der mindestens einen Funktionsbaugruppe herausragenden Verlängerung versehen, an der weitere Funktionsbaugruppen anbringbar sind. Die Verlängerung ragt in vorteilhafter Weise in den Bereich einer Scheibe, vorzugsweise der vorderen Windschutzscheibe, hinein und trägt einen Innenrückspiegel.

Üblicherweise wurden bisher solche Innenrückspiegel entweder an der Windschutzscheibe direkt fixiert, beispielsweise geklebt, oder auch direkt am Dachhimmel oder am Dachmodul, eventuell über ein Zwischenstück, befestigt. Dies ist oft sehr montageaufwändig und bietet auch langfristig nicht die erforderliche Stabilität. Mit der Erfindung kann dagegen das vorgeschlagene Trägerteil mit der Verlängerung eine direkte mechanisch stabile Schnittstelle beispielsweise zum Windlauf oder zum Querholm des Fahrzeugs ohne eine Verbindung zur Windschutzscheibe bilden.

Auch hier kann zum Beispiel eine Verschraubung oder Verrastung zwischen Innenrückspiegel und Trägerteil sowie zum Windholm hin die nötige Stabilität gewährleisten, da das erfindungsgemäße Trägerteil auf einfache Weise schon selbst ohne großen konstruktiven Aufwand mit einer ausreichenden Stabilität ausgerüstet werden kann. Zusätzlich zum Verzicht auf die aufwändigen Montageschritt mit dem Verkleben an der Windschutzscheibe ist weiterhin auch eine einfache Austauschbarkeit des Innenrückspiegels im Servicefall in einer Reparaturwerkstatt, beispielsweise auch ohne einen Wechsel der Windschutzscheibe, ermöglicht.

Gemäß einer weiteren vorteilhaften Ausführungsform kann die zuvor beschriebene Verlängerung des Trägerteils auch einen der Scheibe von innen zugewandten, vorzugsweise optischen Sensor, zum Beispiel einen Regensensor, tragen. Ein solcher Regensensor an der Verlängerung des einstückigen Trägerteils kann auf einfache Weise dann beispielsweise mittels einer federbelasteten Positioniervorrichtung aus einer Vormontagestellung in eine Endstellung mit einem mechanischen Kontakt zur Scheibe gebracht werden. Auch solche Regensensoren wurden bisher überwiegend an der Windschutzscheibe direkt fixiert, beispielsweise geklebt, so dass die hinsichtlich des Innenrückspiegels aufgeführten Vorteile der einfachen Verarbeitung und der größeren Stabilität sowie eine einfache Austauschbarkeit des Innenrückspiegels im Servicefall auch hier zutreffen.

### Kurze Beschreibung der Zeichnung

Ausführungsbeispiele der Erfindung werden anhand der Figuren der Zeichnung erläutert. Es zeigen:
Figur 1 eine Anordnung mit Funktionsbaugruppen in einem sogenannten Dachmodul eines Fahrzeugs und eines erfindungemäßen Trägerteils,
Figur 2 eine Detaildarstellung des an einer Seite fahrzeugspezifischen Trägerteils nach der Figur 1 mit einer Verschraubung an einem Windlauf der Karosserie des Fahrzeugs,
Figur 3 eine andere Ansicht auf das über das Trägerteil am Windlauf montierte Dachmodul mit einem an einer Verlängerung des Trägerteils angebrachten Innenrückspiegel und
Figur 4 eine Detaildarstellung eines Regensensors, der an der Verlängerung des Trägerteils angebracht ist.

### Wege zur Ausführung der Erfindung

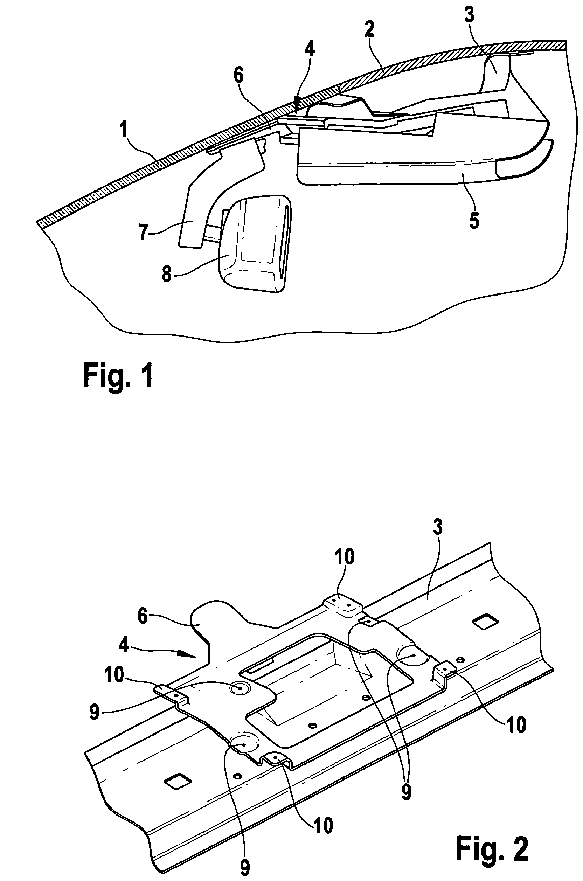

Figur 1 zeigt einen schematischen Ausschnitt des Innenraums eines Fahrzeugs im Bereich der Front- oder Windschutzscheibe 1, die an der Karosserie 2 des Fahrzeugs gehalten ist. Bestandteil der Karosserie 2 des Fahrzeugs ist ein Windlauf oder Querholm 3, der hier im Schnitt gezeigt ist. Am fahrzeugspezifischen Windlauf 3 ist ein einstückiges Trägerteil 4 als mechanische Dach- oder Fahrzeugschnittstelle mit an einer obenliegenden Seite für das jeweilige Fahrzeug spezifischen Verbindungselementen angebracht.

Das Trägerteil 4 nach der Figur 1 weist an der Unterseite Verbindungselemente für ein Dachmodul 5 als Funktionsbaugruppe auf, die hier somit über für das Dachmodul 5 standardisierte Verbindungselemente gehalten werden kann. Am Dachmodul 5 sind hier nicht näher erläuterte, an sich bekannte Bedien- oder Anzeigeelemente vorhanden, die von den Insassen des Fahrzeugs bedient oder beobachtet werden können. Weiterhin ist noch eine Verlängerung 6 des Trägerteils 4 erkennbar, an der über eine vorzugsweise verstellbare Halterung 7 ein Innenrückspiegel 8 befestigt ist. Die Halterung 7 kann beispielweise über eine Schraubverbindung oder einer Verrastung an der Verlängerung 6 des Trägerteils 4 befestigt werden.

Aus Figur 2 ist im Detail erkennbar, dass das Trägerteil 4 an fahrzeugspezifischen Befestigungspunkten 9 der Verbindungselemente, beispielsweise über Verschraubungen, am Windlauf 3 gehalten ist. Es sind weiterhin für das Dachmodul 5 spezifische Verbindungselemente 10 und die Verlängerung 6 vorhanden, an der das Dachmodul 5 und der Innenrückspiegel 8 befestigt werden können (siehe hierzu auch Figur 1).

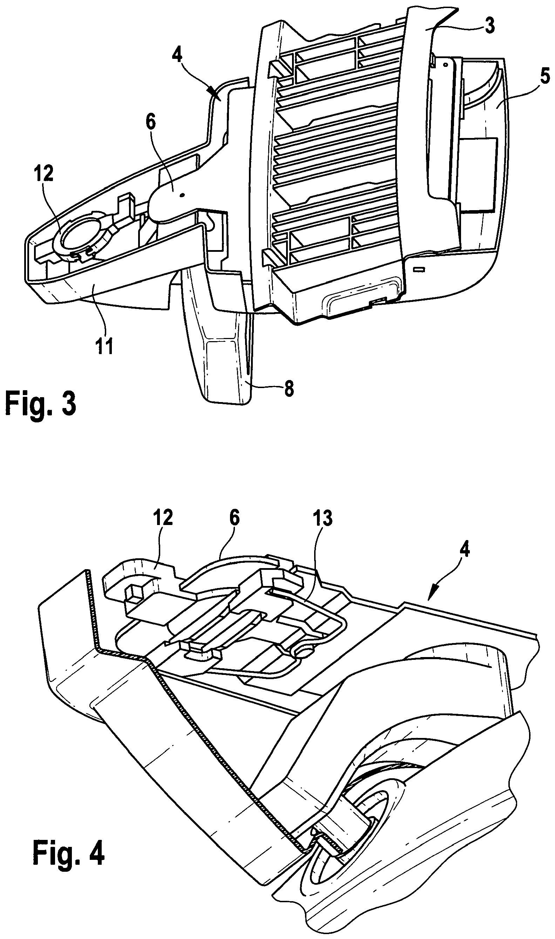

In Figur 3 ist die bisher beschriebene Anordnung noch aus einer anderen Perspektive dargestellt, aus der der Windlauf 3 von oben durch die Karosserie sichtbar ist und das Trägerteil 4 somit unten trägt. Darunter ist dann das Dachmodul 5 erkennbar und es ist auch sichtbar, wie an der Verlängerung 6 des Trägerteils 4 der Innenrückspiegel 8 gehalten ist.

An einer Gehäuseerweiterung 11 des Dachmoduls 5 ist hier in der Figur 3 noch angedeutet, wie weitere Sensoren, beispielsweise ein der Windschutzscheibe 1 (vgl. Figur 1) zugewandter Regensensor 12, an der Anordnung gehalten werden kann.

Aus diesen bisher beschriebenen Figuren ist somit entnehmbar, wie die durch die Integration von weiteren Funktionen immer komplexer werdende Dachmodule 5 oder vergleichbare Anordnungen an immer zahlreichere Varianten von Fahrzeugen, bzw. Konstruktionsdetails des Windlaufs 3, jeweils über das einfache einstückige Trägerteil 4 angepasst werden können.

In Anlehnung an die Darstellung nach der Figur 3 ist in Figur 4 noch gezeigt, wie die Verlängerung 6 des Trägerteils 4 so ausgeführt werden kann, dass der Regensensor 12 im Bereich der Windschutzscheibe angebracht werden kann. Der Regensensor 12 nach der Figur 4 kann an der Verlängerung 6 des einstückigen Trägerteils 4 mittels einer federbelasteten Positioniervorrichtung 13 aus einer Vormontagestellung in eine Endstellung mit einem mechanischen Kontakt zur Windschutzscheibe 1 nach der Figur 1 gebracht werden.

## Patentansprüche

1. Anordnung zur Befestigung von Funktionsbaugruppen in einem Fahrzeug mit einem Trägerteil, das zwischen der mindestens einen Funktionsbaugruppe und dem Fahrzeug angeordnet ist, wobei das Trägerteil (4) einstückig ausgeführt ist und auf der dem Fahrzeug zugewandten Seite jeweils fahrzeugspezifische mechanische Verbindungselemente und auf der gegenüberliegenden, dem Innenraum zugewandten Seite jeweils der mindestens einen Funktionsbaugruppe angepasste mechanische Verbindungselemente aufweist und wobei das einstückige Trägerteil (4) mit einer aus dem Verbindungsbereich mit der mindestens einen Funktionsbaugruppe herausragenden Verlängerung (6) versehen ist, **dadurch gekennzeichnet, dass** an der Verlängerung (6) weitere Funktionsbaugruppen anbringbar sind und die Verlängerung (6) einen Innenrückspiegel (8) trägt.

2. Anordnung nach Anspruch 1, **dadurch gekennzeichnet, dass** mit der Anordnung ein Dachmodul (5) gebildet ist, das in etwa mittig im Übergangsbereich der Fahrzeugkarosserie (2) zu einer Scheibe, vorzugsweise der vorderen Windschutzscheibe (1), angebracht ist.

3. Anordnung nach Anspruch 2, **dadurch gekennzeichnet, dass** das Dachmodul (5) über das einstückige Trägerteil (4) mit dem Windlauf (3) oder Querholm als Karosserieteil (2) als mechanische Dach- oder Fahrzeugschnittstelle verbunden ist.

4. Anordnung nach Anspruch 1, **dadurch gekennzeichnet, dass** die Verlängerung (6) in den Bereich einer Scheibe, vorzugsweise der vorderen Windschutzscheibe (1), hineinragt.

5. Anordnung nach einem der Ansprüche 1 oder 4, **dadurch gekennzeichnet, dass** die Verlängerung (6) einen der Scheibe von innen zugewandten, vorzugsweise optischen Sensor trägt.

6. Anordnung nach Anspruch 5, **dadurch gekennzeichnet, dass** der Sensor ein Regensensor ist (12).

7. Anordnung nach einem der Ansprüche 5 oder 6, **dadurch gekennzeichnet, dass** der Sensor an der Verlängerung (6) des einstückigen Trägerteils (4) mittels einer federbelasteten Positioniervorrichtung (13) aus einer Vormontagestellung in eine Endstellung mit einem mechanischen Kontakt zur Scheibe bringbar ist.

8. Anordnung nach einem der vorhergehenden Ansprüche, **dadurch gekennzeichnet, dass** das die Verbindungen des Trägerteils (4) mit dem Fahrzeug und/oder mit den Funktionsbaugruppen aus Schraubverbindungen bestehen.

9. Anordnung nach einem der Ansprüche 1 bis 7, **dadurch gekennzeichnet, dass** das die Verbindungen des Trägerteils (4) mit dem Fahrzeug und/oder mit den Funktionsbaugruppen aus Verrastungen bestehen.

## Claims

1. Arrangement for fastening functional units in a vehicle comprising a carrier part, which is arranged between the at least one functional unit and the vehicle, wherein the carrier part (4) is designed in one piece and on the side facing the vehicle comprises mechanical connecting elements which in each case are specific to the vehicle and on the opposing side facing the interior comprises mechanical connecting elements which in each case are adapted to the at least one functional unit, and wherein the one-piece carrier part (4) is provided with an extension (6) projecting from the connecting region having the at least one functional unit, **characterized in that** further functional units may be attached to the extension (6) and the extension (6) carries an interior rear view mirror (8).

2. Arrangement according to Claim 1, **characterised in that** by means of the arrangement a roof module (5) is formed which is attached approximately centrally in the transition region of the vehicle body (2) to a window, preferably the front windscreen (1).

3. Arrangement according to Claim 2, **characterised in that** the roof module (5) is connected as a mechanical roof interface or vehicle interface via the one-piece carrier part (4) to the cowl (3) or crossmember as a body part (2).

4. Arrangement according to Claim 1, **characterised in that** the extension (6) projects into the region of a window, preferably the front windscreen (1).

5. Arrangement according to one of Claims 1 or 4, **characterised in that** the extension (6) carries a sensor, preferably an optical sensor, facing the window from the inside.

6. Arrangement according to Claim 5, **characterised in that** the sensor is a rain sensor (12).

7. Arrangement according to one of Claims 5 or 6, **characterised in that** the sensor on the extension (6) of the one-piece carrier part (4) may be moved by means of a spring-loaded positioning device (13) from a preassembled position into an end position with a mechanical contact to the window.

8. Arrangement according to one of the preceding claims, **characterised in that** the connections of the carrier part (4) to the vehicle and/or to the functional units consist of screw connections.

9. Arrangement according to one of Claims 1 to 7, **characterised in that** the connections of the carrier part (4) to the vehicle and/or to the functional units consist of latched connections.

## Revendications

1. Agencement de fixation de modules fonctionnels dans un véhicule, comprenant une partie de support qui est disposée entre l'au moins un module fonctionnel et le véhicule, la partie de support (4) étant réalisée d'une seule pièce et présentant, du côté tourné vers le véhicule, à chaque fois des éléments de connexion mécaniques spécifiques au véhicule, et du côté opposé, tourné vers l'habitacle, à chaque fois des éléments de connexion mécaniques adaptés à l'au moins un module fonctionnel et la partie de support d'une seule pièce (4) étant pourvue d'un prolongement (6) faisant saillie hors de la région de connexion à l'au moins un module fonctionnel, **caractérisé en ce que** des modules fonctionnels supplémentaires peuvent être montés sur le prolongement (6) et le prolongement (6) porte un rétroviseur intérieur (8).

2. Agencement selon la revendication 1, **caractérisé en ce qu'**un module de toit (5) est formé avec l'agencement, lequel est monté approximativement centralement dans la région de transition de la carrosserie de véhicule (2) à une vitre, de préférence au pare-brise avant (1).

3. Agencement selon la revendication 2, **caractérisé en ce que** le module de toit (5) est connecté par le biais de la partie de support d'une seule pièce (4) au tablier (3) ou à la traverse en tant que pièce de carrosserie (2), en tant qu'interface mécanique de toit ou de véhicule.

4. Agencement selon la revendication 1, **caractérisé en ce que** le prolongement (6) pénètre dans la région d'une vitre, de préférence du pare-brise avant (1).

5. Agencement selon l'une quelconque des revendications 1 ou 4, **caractérisé en ce que** le prolongement (6) porte un capteur, de préférence optique, tourné depuis l'intérieur vers la vitre.

6. Agencement selon la revendication 5, **caractérisé en ce que** le capteur est un capteur de pluie (12).

7. Agencement selon l'une quelconque des revendications 5 et 6, **caractérisé en ce que** le capteur, au niveau du prolongement (6) de la partie de support d'une seule pièce (4) peut être amené, au moyen d'un dispositif de positionnement sollicité par ressort (13), d'une position de prémontage dans une position définitive avec un contact mécanique avec la vitre.

8. Agencement selon l'une quelconque des revendications précédentes, **caractérisé en ce que** les connexions de la partie de support (4) au véhicule et/ou aux modules fonctionnels sont constituées par des connexions vissées.

9. Agencement selon l'une quelconque des revendications 1 à 7, **caractérisé en ce que** les connexions de la partie de support (4) au véhicule et/ou aux modules fonctionnels sont constituées par des encliquetages.
